# EUROPÄISCHE PATENTSCHRIFT

(11) **EP 1 841 045 B1**
(45) Veröffentlichungstag und Bekanntmachung des Hinweises auf die Patenterteilung: **23.09.2015**
(21) Anmeldenummer: 07104587.6
(22) Anmeldetag: 21.03.2007
(51) Int. Cl.: H02K 9/02

(54) **Abdeckvorrichtung einer elektrischen Maschine mit einem Luftstutzen**
Cover device of an electric machine with an air socket
Dispositif de fermeture d'une machine électrique avec un canal d'aération

(30) Priorität: 31.03.2006 DE 102006016250
(43) Veröffentlichungstag der Anmeldung: 03.10.2007
(73) Patentinhaber: ROBERT BOSCH GMBH, 70442 Stuttgart (DE)
(72) Erfinder: Muth, Frank, 71254, Ditzingen (DE); Wolf, Armin, 74251, Lehrensteinsfeld (DE); Kurz, Edgar, 74081, Heilbronn-Horkheim (DE)

(56) Entgegenhaltungen:
- EP-A1- 0 753 930
- DE-A1- 10 019 260
- US-A- 5 742 108

## Beschreibung

Die Erfindung betrifft eine Abdeckvorrichtung einer elektrischen Maschine, insbesondere eines Generators eines Kraftfahrzeugs, mit einer Abdeckung und mindestens einem Luftstutzen.

### Stand der Technik

Abdeckungen der eingangs genannten Art sind bekannt. So offenbart die DE 100 24 665 A1 eine Abdeckkappe, insbesondere für einen Generator, mit einem Ansaugstutzen, durch den Luft in einen Generator geführt wird. Dabei ist der Ansaugstutzen einstückig mit der Abdeckkappe ausgebildet. Eine solche Ausführung ist jedoch nicht immer technisch umsetzbar. Bekannt ist es auch, den Ansaugstutzen durch Schrauben an der Abdeckkappe zu befestigen, wodurch aber die Herstellungskosten erhöht werden.

Aus der DE 100 19 260 A1 ist ein Kommutatormotor bekannt, dessen Gehäuse einen Auslass hat. An dem Auslass ist ein Filtergehäuse für einen Partikelfilter angeordnet. Es wird vorgeschlagen, den auswechselbaren Partikelfilter beispielsweise mittels eines Bajonettverschlusses zu befestigen.

Aus der EP 0 753 930 A1 ist eine elektrische Maschine mit einer Abdeckvorrichtung bekannt. Die Abdeckvorrichtung weist einen separaten rohrartigen Adapter zum Ansaugen von Luft auf, der mittels lösbarer Schnapphaken an einer Abdeckkappe zu befestigen ist.

### Offenbarung der Erfindung

Die Erfindung baut auf der gattungsgemäßen Abdeckung dadurch auf, dass ein Bajonettverschluss vorgesehen ist, bei dem die Aufnahmetaschen und/oder die Stege derart ausgebildet und/oder über den Umfang des Luftstutzens verteilt angeordnet sind, dass ein Falschmontage-Verbindungsschutz entsteht. Eine Bajonettverbindung erfolgt über eine Steck-Dreh-Bewegung, bei der zwei Elemente zunächst ineinander gesteckt oder aneinandergeführt und anschließend so zueinander verdreht werden, dass sie formschlüssig ineinander greifen. Der Falschmontage-Verbindungsschutz verwirklicht das "Poka-Yoke"-Prinzip. Nach diesem Prinzip wird eine Verbindung zweier Bauteile so gestaltet, dass diese nicht falsch zusammengebaut werden können. Die Bauteilelemente werden also so gestaltet, dass sie nur auf eine einzige, eindeutige Art und Weise zusammengefügt werden können. Dieses Prinzip trägt sehr zur Qualitätssicherung bei und erleichtert einem Monteur die Arbeit. Bei der Bajonettverbindung kann dieses Prinzip verwirklicht werden, indem mindestens eine Aufnahmetasche und ein Steg eine andere Formgebung aufweisen, als die übrigen Aufnahmetaschen und Stege. So können zum Beispiel ein Steg und eine Aufnahmetasche besonders breit ausgebildet werden, sodass nur diese zusammenpassen, und dadurch die Positionierung des Luftstutzens eindeutig ist. Alternativ dazu oder zusätzlich kann die Anordnung der Aufnahmetaschen beziehungsweise der Stege so gestaltet sein, dass eine eindeutige Positionierung des Luftstutzens an der Abdeckung realisiert wird. Dies kann zum Beispiel durch unregelmäßig über den Umfang des Luftstutzens verteilt angeordnete Aufnahmetaschen oder Stege erreicht werden.

Unter Abdeckung wird hier ein Gehäuseteil verstanden, welches kappen- oder deckelartig einen offenen Gehäusebereich der elektrischen Maschine verschließt. Dabei dient die Abdeckung sowohl als Halterung für den Luftstutzen als auch als Schutz für die in der elektrischen Maschine vorhandenen elektronischen Bauteile und verhindert, zum Beispiel, auch ein Verletzen einer Person an Drahtenden der elektrischen Maschine. Dadurch, dass die Abdeckung und der Luftstutzen, getrennt voneinander ausgebildet sind, ist es möglich die Form der Abdeckung und/oder des Luftstutzens wesentlich komplexer zu gestalten und damit die Abdeckvorrichtung an unterschiedliche Anwendungsfälle/Einbaulagen optimal anzupassen. Da die Mittel jeweils einstückig mit der Abdeckung beziehungsweise dem Luftstutzen ausgebildet sind, sind bei dem Zusammenbau keine weiteren Befestigungselemente, wie zum Beispiel Schrauben, notwendig, wodurch sich der Zusammenbau wesentlich einfacher gestaltet, und wodurch die Herstellungskosten der Abdeckvorrichtung verringert werden.

Vorteilhafterweise weist die Bajonettverbindung an der Abdeckung oder dem Luftstutzen angeordnete Aufnahmetaschen und an dem Luftstutzen oder der Abdeckung angeordnete Stege, insbesondere Radialstege, zum Eingriff in die Aufnahmetaschen auf. Die Stege oder die Aufnahmetaschen sind dabei über den Umfang des im Wesentlichen rohrförmigen Luftstutzens verteilt angeordnet. An der Abdeckung sind die Aufnahmetaschen beziehungsweise die Stege entsprechend angeordnet. Dabei weisen die Aufnahmetaschen oder die Stege des Luftstutzens jeweils einen solchen Abstand zueinander auf, dass die Stege beziehungsweise die Aufnahmetaschen der Abdeckung dazwischen passen. Beim Zusammenbau werden der Luftstutzen und die Abdeckung zunächst so zusammengeführt, dass die Stege beziehungsweise die Aufnahmetaschen des Luftstutzens und die Aufnahmetaschen beziehungsweise die Stege der Abdeckung in einer Ebene liegen, sodass beim anschließenden Verdrehen die Stege in die Aufnahmetaschen bewegt werden. Befinden sich die Stege in den Aufnahmetaschen, so sind der Luftstutzen und die Abdeckung in Richtung der Drehachse formschlüssig verbunden

Nach einer Weiterbildung der Erfindung weist die Bajonettverbindung einen Drehanschlag auf. Beim Zusammenfügen von Abdeckung und Luftstutzen wird so gewährleistet, dass der Luftstutzen auf der Abdeckung durch eine Drehung bis zum Drehanschlag eine bestimmte Endlage beziehungsweise Ausrichtung aufweist. Beim Zusammenfügen muss so nicht überprüft werden, ob der Luftstutzen korrekt ausgerichtet ist.

Vorteilhafterweise ist mindestens eine Aufnahmetasche in Drehrichtung endseitig geschlossen oder weist einen Anschlag auf. Somit dient dieser Anschlag oder das geschlossene Ende der Aufnahmetasche als Drehanschlag für die Bajonettverbindung. Weisen mehrere oder alle Aufnahmetaschen einen solchen Drehanschlag auf, so kann der Luftstutzen besonders genau positioniert werden.

Nach einer Weiterbildung der Erfindung bilden die Stege mit den Aufnahmetaschen einen Presssitz. Dazu weisen die Aufnahmetaschen vorteilhafterweise eine Verengung in Drehrichtung und/oder die Stege eine Verbreiterung entgegen der Drehrichtung auf. Dadurch wird beim Ineinanderführen von einem Steg in eine Aufnahmetasche der Steg und/oder die Aufnahmetasche zumindest teilweise elastisch verformt und die Stege mit den Aufnahmetaschen verspannt, wodurch, unter Anderem, eine kraftschlüssige Verdrehsicherung entsteht. Vorteilhafterweise sind die Verengungen der Aufnahmetaschen beziehungsweise die Verbreiterungen der Stege so gestaltet, dass der Luftstutzen auf die Abdeckung gedrückt beziehungsweise gepresst wird, und so eine luftdichte, spaltoptimierte Verbindung zwischen dem Luftstutzen und der Abdeckung entsteht.

Zweckmäßigerweise ist an der Abdeckung oder dem Luftstutzen mindestens ein Klipselement angeordnet, das mit einem Gegenklipselement von dem Luftstutzen oder der Abdeckung in einer Enddrehstellung verrastet. Durch ein formschlüssiges Verrasten eines Klipselements mit einem Gegenklipselement in einer Endstellung wird ein Lösen der Bajonettverbindung verhindert. Vorteilhafterweise weist das Klipselement eine Vertiefung oder einen Vorsprung und das Gegenklipselement einen in die Vertiefung einrastenden Gegenvorsprung oder eine an dem Vorsprung einrastende Gegenvertiefung auf, wodurch eine einfache und wirkungsvolle Drehsicherung entsteht. Dabei ist das Klipselement und/oder das Gegenklipselement vorteilhafterweise zumindest teilweise elastisch verformbar.

Zweckmäßigerweise ist die Vertiefung und/oder die Gegenvertiefung ein Durchbruch, welcher kostengünstiger und einfacher herstellbar ist.

Vorteilhafterweise verrasten das Klipselement und das Gegenklipselement in axialer Richtung des Luftstutzens miteinander. Das heißt, dass das Klipselement und das Gegenklipselement in die axiale Richtung des Luftstutzens ausgerichtet sind, und dass sich das Klipselement oder das Gegenklipselement beim Festdrehen der Bajonettverbindung zunächst in axialer Richtung des Luftstutzens elastisch verformt und anschließend mit dem Gegenklipsbeziehungsweise dem Klipselement verrastet.

Nach einer Weiterbildung der Erfindung weist die Abdeckung und/oder der Luftstutzen mindestens einen Vorsprung, insbesondere einen Radialvorsprung, auf, der mittels eines Sicherungselements an dem Luftstutzen oder der Abdeckung zur Drehsicherung befestigbar ist.

Vorteilhafterweise ist das Sicherungselement eine Sicherungsgewindeschraube, insbesondere eine selbstschneidende Sicherungsgewindeschraube, wodurch eine besonders verlässliche Drehsicherung gewährleistet ist. Durch eine selbstschneidende Sicherungsgewindeschraube wird außerdem ein aufwändiges Herstellen eines Gewindes vermieden.

Nach einer Weiterbildung der Erfindung sind die Abdeckung und/oder der Luftstutzen aus Kunststoff gefertigt, wodurch an Gewicht und Kosten gespart wird und nötige Elastizitäten leicht ermöglicht werden. Außerdem bietet eine Abdeckvorrichtung aus Kunststoff einen Isolierungsschutz.

### Kurze Beschreibung der Zeichnungen

Im Folgenden soll die Erfindung anhand einiger Figuren näher erläutert werden. Dabei zeigen im Folgenden:
- Figur 1: die erfindungsgemäße Abdeckvorrichtung im arretierten Zustand,
- Figur 2: die Abdeckvorrichtung in einem nicht-arretierten Zustand und
- Figuren 3A bis 3C: das schrittweise Zusammenfügen der Bajonettverbindung

### Ausführungsform(en) der Erfindung

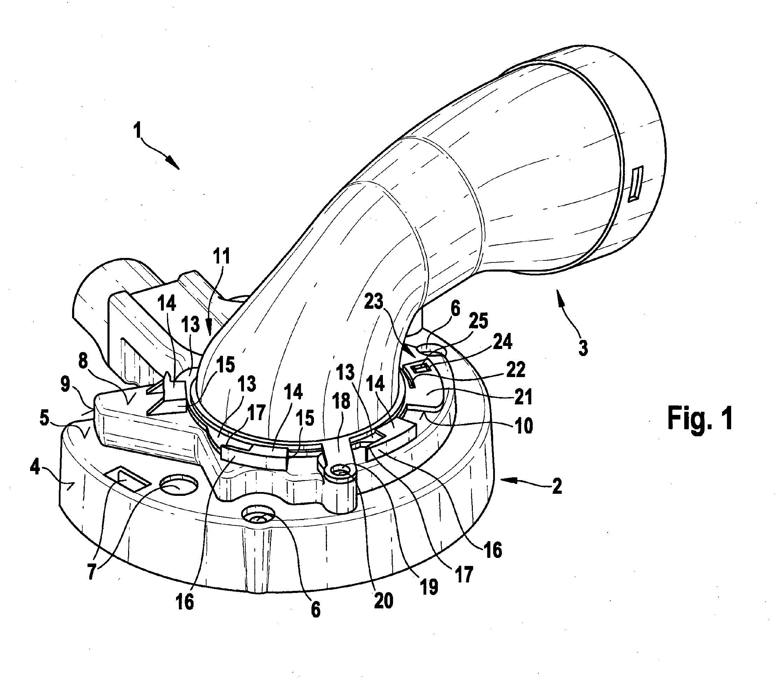

Die Figur 1 zeigt eine Abdeckvorrichtung 1 mit einer im Wesentlichen zylinderförmigen Abdeckung 2 und einen im Wesentlichen rohrförmigen Luftstutzen 3, die über eine Bajonettverbindung miteinander verbunden sind. Die kappenartig gestaltete Abdeckung weist eine Mantelfläche 4 und eine erste Oberfläche 5 auf. In der Oberfläche 5 sind in Randnähe Schraubenöffnungen 6 und Funktionsöffnungen 7 ausgebildet. Durch die Funktionsöffnungen 7, die nicht zur Luftzuführung dienen, können zum Beispiel Kabel oder Schläuche geführt werden. Die Schraubenöffnungen 6 werden dazu genutzt, die Abdeckung 2 an eine elektrische Maschine, wie zum Beispiel einen Generator, mittels Schrauben zu befestigen. Von der Oberfläche 5 beabstandet ist eine zweite Oberfläche 8 parallel zur Oberfläche 5 angeordnet, die an ihrem Umfang eine Mantelfläche 9 aufweist, welche die Oberfläche 8 auf der Oberfläche 5 stützt, wobei die Oberfläche 5 und die Oberfläche 8 mit der Mantelfläche 9 einstückig so verbunden sind, dass sie eine Gesamtoberfläche der Abdeckung 2 bilden.

Der Luftstutzen 3 liegt mit einer Kontaktfläche 10 an einem Ende 11 des Luftstutzens 3 auf der Oberfläche 8 der Abdeckung 2 auf. Weiterhin weist der Luftstutzen 3 eine Krümmung auf. Das Ende 11 des Luftstutzens 3 ist kreisförmig gestaltet. An seinem Umfang weist der Luftstutzen 3 am Ende 11 mehrere Stege 13 auf, die radial nach außen vorstehen. Die Abdeckung 2 weist an ihrer Oberfläche 8 mit den Stegen 13 korrespondierende Aufnahmetaschen 14 auf, welche ein geschlossenes Ende 15 aufweisen. Außerdem weisen die Aufnahmetaschen 14 dem geschlossenen Ende 15 entgegengerichtete Einführhilfen 16 mit einer schräg zulaufenden Spitze 17 auf.

In der arretierten Stellung liegen die Stege 13 an dem geschlossenen Enden 15 der Aufnahmetaschen 14 an und werden von den Aufnahmetaschen zumindest teilweise umschlossen.

Weiterhin weist der Luftstutzen 3 an seinem Ende 11 einen Radialvorsprung 18 auf, in welchem eine Bohrung 19 senkrecht zur Oberfläche 8 ausgebildet ist. Der Umfang der Oberfläche 8 der Abdeckung 2 ist dabei so geformt, dass eine darin ausgebildete Vertiefung 20 mit der Bohrung 19 korrespondiert.

Weiterhin ist an dem Ende 11 des Luftstutzens 3 ein Klipselement 21 angeordnet, welches teilweise radial von dem Luftstutzen 3 beabstandet ist, sodass ein Spalt 22 zwischen dem Luftstutzen 3 und dem Klipselement 21 vorhanden ist. An seinem vom Luftstutzen 3 beabstandeten Ende 23 weist das Klipselement 21 einen Durchbruch 24 auf, in dem ein Vorsprung 25 der Oberfläche 8 eingerastet ist.

Der Luftstutzen 3 ist also verbunden mit der Abdeckung 2, indem seine Stege 13 in die Aufnahmetasche 14 der Abdeckung 2 eingeführt sind, und der Vorsprung 25 in dem Durchbruch 24 des Klipselements 21 eingerastet ist. Lösen lässt sich die Verbindung einfach durch Anheben des Endes 23 des Klipselements 21 von der Oberfläche 8 und einem Herausdrehen der Stege 13 aus den Aufnahmetaschen 14. Zur zusätzlichen Sicherung, also als weiterer Verdrehschutz, wird in die Bohrung 19 des Luftstutzens 3 eine Schraube, insbesondere eine selbstschneidende Gewindesicherungsschraube, eingeführt und anschließend in die Vertiefung 20 geschraubt, sodass der Stutzen 3 durch die Verschraubung zusätzlich vor einem Verdrehen gesichert ist.

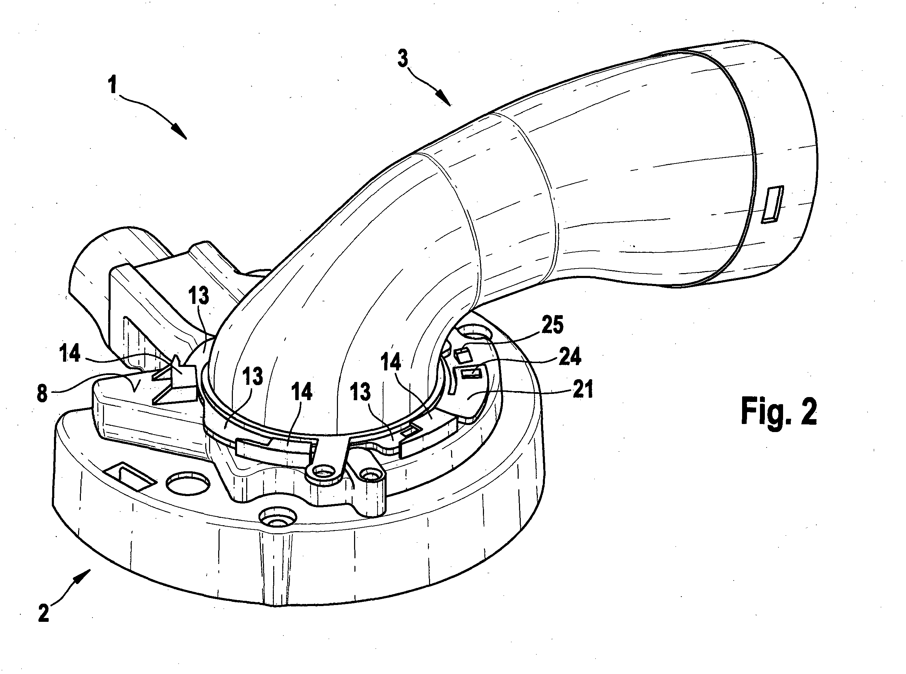

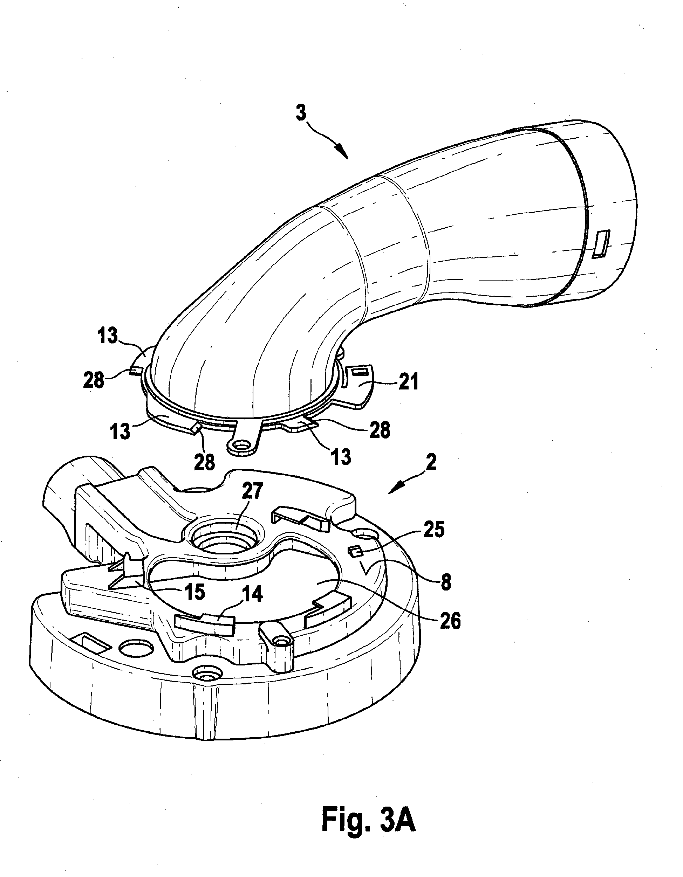

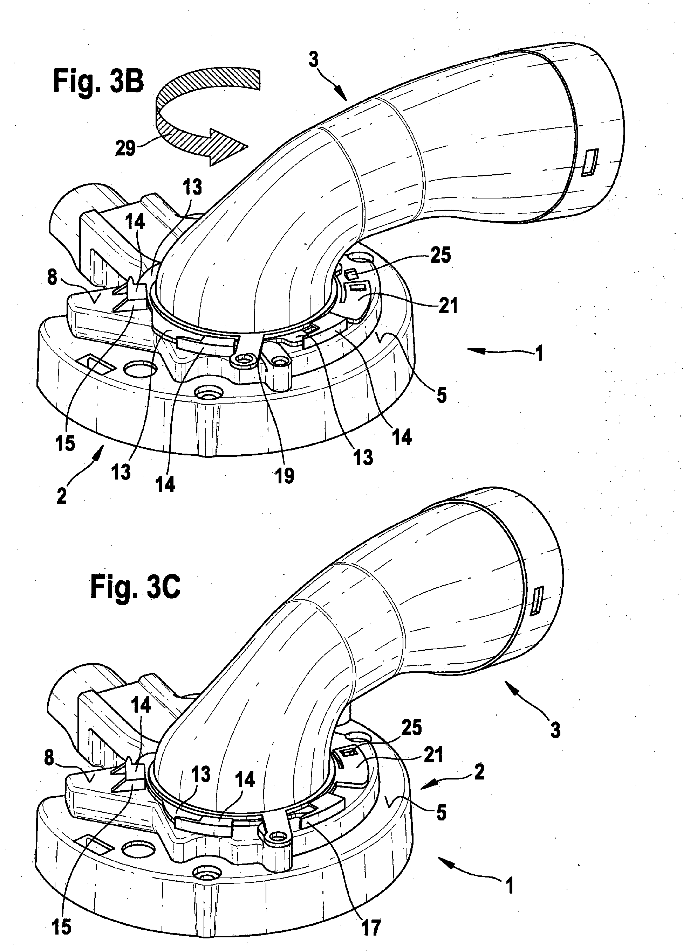

Die Figur 2 zeigt die Abdeckvorrichtung der Figur 1 in einem nicht-arretierten Zustand. Die Stege 13 sind dabei nicht in die Aufnahmetaschen 14 eingeführt und der Vorsprung 25 ist nicht in dem Durchbruch 24 eingerastet. Hier ist zu erkennen, dass der Vorsprung 25 eine Steigung von der Oberfläche 8 ausgehend in Schließ-Drehrichtung aufweist, wobei die Schließ-Drehrichtung der Richtung entspricht, in der der Luftstutzen gedreht werden muss, damit die Stege 13 in die Aufnahmetaschen 14 eingeführt Werden. In dieser Darstellung ist zu erkennen, dass die in einer Ebene liegenden Stege 13 und Aufnahmetaschen 14 der Bajonettverbindung so gestaltet sind, dass die Stege 13 zwischen die Aufnahmetaschen 14 passen. Somit ist ein Entfernen des Luftstutzens 3 von der Abdeckung 2 möglich. Darüber hinaus ist, wie auch in den Figuren 1, 3A, 3B und 3C, zu sehen, dass die Stege 13 und die Aufnahmetaschen 14 unregelmäßig über den Umfang des Luftstutzens 3 verteilt angeordnet sind. Dadurch wird erreicht, dass der Luftstutzen 3 nicht falsch eingesetzt und damit falsch auf der Abdeckung 2 ausgerichtet werden kann.

Die Figuren 3A bis 3C zeigen schrittweise das Zusammenfügen des Luftstutzens 3 und der Abdeckung 2. Die Figur 3A zeigt den Luftstutzen 3 beabstandet zur Abdeckung 2, sodass zwei Öffnungen 26, 27 in der Oberfläche 8 zu sehen sind, durch welche Luft, die durch den Luftstutzen 3 zugeführt wird, in die elektrische Maschine einströmt. In dieser Darstellung ist zu erkennen, dass die Stege 13 an ihrem im arretierten Zustand an dem geschlossenen Ende 15 der Aufnahmetasche 14 anliegendem Ende eine Schräge 28 aufweisen. Diese Schräge 28 ist so gestaltet, dass beim Drehen des Luftstutzens 3 in Richtung des Pfeiles 29 (also in Schließ-Drehrichtung), dargestellt in Figur 3B, die Stege 13 mit den Aufnahmetaschen 14 einen Presssitz bilden, sodass der Luftstutzen 3 auf die Abdeckung 2 gepresst wird, und somit ein spaltoptimierter Sitz gewährleistet ist. Beim Einführen des Stegs 13 in die Aufnahmetasche 14 fungiert die Schräge 28 zunächst als Einführhilfe und bewirkt dann ein Überdehnen der Aufnahmetasche 14, sodass der Presssitz entsteht.

Figur 3C zeigt die Abdeckvorrichtung, wie in Figur 1 dargestellt, im arretierten Zustand, in welchem der Luftstutzen 3 an der Abdeckung 2 befestigt ist, und nur durch Lösen des Klipselements 21 von dem Vorsprung 25 gelöst werden kann.

## Patentansprüche

1. Abdeckvorrichtung einer elektrischen Maschine, insbesondere eines Generators eines Kraftfahrzeugs, mit einer Abdeckung und mindestens einem Luftstutzen, wobei die Abdeckung (2) und der Luftstutzen (3) als separate Teile ausgebildet sind und jeweils einstückig mindestens ein Mittel zum lösbaren aneinander Befestigen aufweisen, **dadurch gekennzeichnet, dass** die lösbaren Mittel als Bajonettverbindung ausgebildet sind und dass die Bajonettverbindung an der Abdeckung (2) oder dem Luftstutzen (3) angeordnete Aufnahmetaschen (14) und an dem Luftstutzen (3) oder der Abdeckung (2) angeordnete Stege (13), insbesondere Radialstege, zum Eingriff in die Aufnahmetaschen (14) aufweist wobei die Aufnahmetaschen (14) oder die Stege (13) derart ausgebildet und/oder über den Umfang des Luftstutzens (3) verteilt angeordnet sind, das ein Falschmontage-Verbindungsschutz gebildet wird.

2. Abdeckvorrichtung nach einem der vorhergehenden Ansprüche, **dadurch gekennzeichnet, dass** die Bajonettverbindung einen Drehanschlag aufweist.

3. Abdeckvorrichtung nach einem der vorhergehenden Ansprüche, **dadurch gekennzeichnet, dass** die mindestens eine Aufnahmetasche (14) in Drehrichtung endseitig geschlossen ist oder einen Anschlag aufweist.

4. Abdeckvorrichtung nach einem der vorhergehenden Ansprüche, **dadurch gekennzeichnet, dass** die Stege (13) mit den Aufnahmetaschen (14) einen Presssitz bilden.

5. Abdeckvorrichtung nach einem der vorhergehenden Ansprüche, **dadurch gekennzeichnet, dass** an der Abdeckung (2) oder dem Luftstutzen (3) mindestens ein Klipselement (21) angeordnet ist, das mit einem Gegenklipselement von dem Luftstutzen (3) oder der Abdeckung (2) in einer Enddrehstellung verrastet.

6. Abdeckvorrichtung nach Anspruch 5, **dadurch gekennzeichnet, dass** das Klipselement (21) eine Vertiefung oder einen Vorsprung (25) aufweist, und dass das Gegenklipselement einen in die Vertiefung einrastenden Gegenvorsprung oder eine Gegenvertiefung, in die der Vorsprung (25) einrastet, aufweist.

7. Abdeckvorrichtung nach Anspruch 6, **dadurch gekennzeichnet, dass** die Vertiefung ein Durchbruch (24) ist.

8. Abdeckvorrichtung nach einem der vorhergehenden Ansprüche 5, 6 oder 7, **dadurch gekennzeichnet, dass** das Klipselement (21) und das Gegenklipselement in axialer Richtung des Luftstutzens (3) miteinander verrasten.

9. Abdeckvorrichtung nach einem der vorhergehenden Ansprüche, **dadurch gekennzeichnet, dass** die Abdeckung (2) und/oder der Luftstutzen (3) mindestens einen Vorsprung, insbesondere einen Radialvorsprung (18), aufweist, der mittels eines Sicherungselements an dem Luftstutzen (3) oder der Abdeckung (2) zur Drehsicherung befestigbar ist.

10. Abdeckvorrichtung nach Anspruch 9, **dadurch gekennzeichnet, dass** das Sicherungselement eine Sicherungsgewindeschraube, insbesondere eine selbstschneidende Sicherungsgewindeschraube ist.

11. Abdeckvorrichtung nach einem der vorhergehenden Ansprüche, **dadurch gekennzeichnet, dass** die Abdeckung (2) und/oder der Luftstutzen (3) aus Kunststoff gefertigt sind.

12. Elektrische Maschine mit einer Abdeckvorrichtung (1) nach einem der vorhergehenden Ansprüche.

## Claims

1. Covering apparatus of an electrical machine, in particular of a generator of a motor vehicle, comprising a cover and at least one air nozzle, wherein the cover (2) and the air nozzle (3) are in the form of separate parts and each integrally has at least one means for being detachably fastened to one another, **characterized in that** the detachable means are in the form of a bayonet connection, and **in that** the bayonet connection has receiving pockets (14), which are arranged on the cover (2) or the air nozzle (3), and webs (13), in particular radial webs, which are arranged on the air nozzle (3) or the cover (2) and serve to engage in the receiving pockets (14), wherein the receiving pockets (14) or the webs (13) are formed and/or arranged in a manner distributed over the circumference of the air nozzle (3) in such a way that an incorrect installation connection prevention means is formed.

2. Covering apparatus according to Claim 1, **characterized in that** the bayonet connection has a rotary stop.

3. Covering apparatus according to either of the preceding claims, **characterized in that** the at least one receiving pocket (14) is closed at the end in the rotation direction or has a stop.

4. Covering apparatus according to one of the preceding claims, **characterized in that** the webs (13) form a press-fit with the receiving pockets (14).

5. Covering apparatus according to one of the preceding claims, **characterized in that** at least one clip element (21) is arranged on the cover (2) or the air nozzle (3), the said clip element latching with a mating clip element of the air nozzle (3) or the cover (2) in an end rotation position.

6. Covering apparatus according to Claim 5, **characterized in that** the clip element (21) has a recess or a projection (25), and **in that** the mating clip element has a mating projection which latches into the recess or has a mating recess into which the projection (25) latches.

7. Covering apparatus according to Claim 6, **characterized in that** the recess is an aperture (24).

8. Covering apparatus according to one of the preceding Claims 5, 6 and 7, **characterized in that** the clip element (21) and the mating clip element latch with one another in the axial direction of the air nozzle (3).

9. Covering apparatus according to one of the preceding claims, **characterized in that** the cover (2) and/or the air nozzle (3) have/has at least one projection, in particular a radial projection (18), which can be fastened to the air nozzle (3) or to the cover (2) by means of a securing element for the purpose of preventing rotation.

10. Covering apparatus according to Claim 9, **characterized in that** the securing element is a securing threaded screw, in particular a self-tapping securing threaded screw.

11. Covering apparatus according to one of the preceding claims, **characterized in that** the cover (2) and/or the air nozzle (3) are/is manufactured from plastic.

12. Electrical machine comprising a covering apparatus (1) according to one of the preceding claims.

## Revendications

1. Dispositif de fermeture d'une machine électrique, en particulier d'un générateur d'un véhicule à moteur, avec un couvercle et au moins un canal d'aération, dans lequel le couvercle (2) et le canal d'aération (3) sont réalisés comme des pièces séparées et présentent respectivement d'un seul tenant au moins un moyen pour leur fixation séparable l'un à l'autre, **caractérisé en ce que** les moyens séparables sont réalisés par un assemblage à baïonnette et **en ce que** l'assemblage à baïonnette présente des poches de réception (14) agencées sur le couvercle (2) ou sur le canal d'aération (3) et des nervures (13) agencées sur le canal d'aération (3) ou sur le couvercle (2), en particulier des nervures radiales, à engager dans les poches de réception (14), dans lequel les poches de réception (14) ou les nervures (13) sont configurées et/ou sont agencées de façon répartie sur la périphérie du canal d'aération (3) de façon à former une protection d'assemblage contre un montage erroné.

2. Dispositif de fermeture selon la revendication 1, **caractérisé en ce que** l'assemblage à baïonnette présente une butée de rotation.

3. Dispositif de fermeture selon l'une quelconque des revendications précédentes, **caractérisé en ce que** ladite au moins une poche de réception (14) est fermée ou présente une butée à son extrémité dans le sens de rotation.

4. Dispositif de fermeture selon l'une quelconque des revendications précédentes, **caractérisé en ce que** les nervures (13) forment un siège ajusté avec les poches de réception (14).

5. Dispositif de fermeture selon l'une quelconque des revendications précédentes, **caractérisé en ce qu'**au moins un élément d'encliquetage (21) est agencé sur le couvercle (2) ou sur le canal d'aération (3), qui s'encliquète dans une position tournée finale avec un contre-élément d'encliquetage du canal d'aération (3) ou du couvercle (2).

6. Dispositif de fermeture selon la revendication 5, **caractérisé en ce que** l'élément d'encliquetage (21) présente un creux ou une saillie (25), et **en ce que** le contre-élément d'encliquetage présente une saillie opposée s'encliquetant dans le creux ou un creux opposé, dans lequel la saillie (25) vient s'encliqueter.

7. Dispositif de fermeture selon la revendication 6, **caractérisé en ce que** le creux est un passage (24).

8. Dispositif de fermeture selon l'une quelconque des revendications précédentes 5, 6 ou 7, **caractérisé en ce que** l'élément d'encliquetage (21) et le contre-élément d'encliquetage s'encliquètent l'un à l'autre dans la direction axiale du canal d'aération (3).

9. Dispositif de fermeture selon l'une quelconque des revendications précédentes, **caractérisé en ce que** le couvercle (2) et/ou le canal d'aération (3) présente au moins une saillie, en particulier une saillie radiale (18), qui peut être fixée au moyen d'un élément de fixation au canal d'aération (3) ou au couvercle (2) pour la fixation rotative.

10. Dispositif de fermeture selon la revendication 9, **caractérisé en ce que** l'élément de fixation est une vis de fixation, en particulier une vis de fixation autotaraudeuse.

11. Dispositif de fermeture selon l'une quelconque des revendications précédentes, **caractérisé en ce que** le couvercle (2) et/ou le canal d'aération (3) sont fabriqués en matière plastique.

12. Machine électrique avec un dispositif de fermeture (1) selon l'une quelconque des revendications précédentes.
